# EUROPEAN PATENT SPECIFICATION

(11) **EP 3 494 669 B1**
(45) Date of publication and mention of the grant of the patent: **29.07.2020**
(21) Application number: 17842967.6
(22) Date of filing: 24.08.2017
(51) Int. Cl.: H04L 5/00, H04W 72/12

(54) **DEVICE AND METHOD FOR CO-EXISTENCE OF LOW-LATENCY AND LATENCY-TOLERANT COMMUNICATION RESOURCES**
GERÄT UND VERFAHREN ZUR KOEXISTENZ VON NIEDRIGLATENTEN UND LATENZTOLERANTEN KOMMUNIKATIONSRESSOURCEN
DISPOSITIF ET PROCÉDÉ DE COEXISTENCE DE RESSOURCES DE COMMUNICATION À FAIBLE LATENCE ET TOLÉRANTES À LA LATENCE

(30) Priority: 25.08.2016 US 201662379559 P; 16.09.2016 US 201662395914 P; 11.10.2016 US 201662406823 P; 30.06.2017 US 201715640242
(43) Date of publication of application: 12.06.2019
(73) Proprietor: Huawei Technologies Co., Ltd., Longgang District Shenzhen, Guangdong 518129 (CN)
(72) Inventor: AU, Kelvin Kar Kin, Kanata, Ontario K2M 0A2 (CA); MAZZARESE, David, Jean-marie, Shenzhen Guangdong 518129 (CN); MA, Jianglei, Ottawa, Ontario K2M 2W5 (CA); LYU, Yongxia, Shenzhen Guangdong 518129 (CN); XUE, Lixia, Shenzhen Guangdong 518129 (CN); ISLAM, Toufiqul, Ottawa, Ontario K2B 7T4 (CA); SALEM, Mohamed, Adel, Kanata, Ontario K2M 0H8 (CA); BALIGH, Mohammadhadi, Ottawa, Ontario K2M 0B1 (CA)
(74) Representative: Pfenning, Meinig & Partner mbB
(86) International application number: PCT/CN2017/098856
(87) International publication number: WO 2018/036545

(56) References cited:
- CN-A- 101 212 762
- CN-A- 101 986 619
- US-A1- 2004 062 273
- US-A1- 2005 071 471
- US-A1- 2015 334 685
- US-A1- 2016 127 094
- NOKIA ET AL: "Punctured Scheduling for Low Latency Transmissions", 3GPP DRAFT; R1-167308, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20160822 - 20160826 21 August 2016 (2016-08-21), XP051125827, Retrieved from the Internet: URL:http://www.3gpp.org/ftp/Meetings_3GPP_ SYNC/RAN1/Docs/ [retrieved on 2016-08-21]

## Description

### TECHNICAL FIELD

The present disclosure relates generally to wireless communications, and, in particular embodiments, to a system and method for co-existence of low-latency and latency-tolerant communication resources.

### BACKGROUND

Modern wireless networks support communications of diverse traffic types (e.g., voice, video, data, etc.) which have different requirements for transmission. For example, traffic for interactive video may have different requirements of latency and loss rate than traffic for streaming video. In another example, traffic for online games may have different throughput and latency requirements than traffic for browsing the Internet. It would be desirable to develop system and method that accommodate transmissions of different types of traffic in a communications network.

In US 2015/0334685 A1 a method of wireless communication is disclosed that assigns time-frequency resources for receiving user data utilizing a first transmission time interval. During an ongoing transmission a thin control channel can carry information that punctures the ongoing transmission utilizing said first transmission time interval with a second relatively short transmission time interval.

### SUMMARY

Technical advantages are generally achieved by aspects of this disclosure which describe a system and method for co-existence of low-latency and latency-tolerant communication resources.

According to one aspect of the present disclosure, there is provided a method that includes: receiving, by a user equipment (UE), an indication that a first portion of a first region in a time-frequency resource region is used for transmitting first data of a first type of traffic, the time-frequency resource region having a first transmission interval, wherein the first region is reserved for transmissions of a second type of traffic different than the first type of traffic; and receiving, by the UE, the first data of the first type of traffic in the first portion of the first region according to the indication. The second type of traffic requires a lower latency than the first type of traffic.

Optionally, in any of the preceding aspects, the indication is transmitted to the UE in the first transmission interval after the first data of the first type of traffic is transmitted in the first portion of the first region.

Optionally, in any of the preceding aspects, the indication is transmitted to the UE in a second transmission interval following the first transmission interval, the indication being carried in a downlink control channel of the second transmission interval.

Optionally, in any of the preceding aspects, the method further includes: receiving second data of the first type of traffic in a second region of the time-frequency resource region, the second region allocated for transmissions of the first type of traffic.

Optionally, in any of the preceding aspects, the first region includes a different time-frequency resource than the second region.

Optionally, in any of the preceding aspects, the method further includes: receiving third data of the second type of traffic in a second portion of the first region.

Optionally, in any of the preceding aspects, the first data and the third data are transmitted using different OFDM numerologies, an OFDM numerology comprising a set of OFDM parameters.

Optionally, in any of the preceding aspects, the first data is transmitted in different time-frequency resources than the third data.

According to yet another aspect of the present disclosure, there is provided a device that includes: a non-transitory memory storage comprising instructions; and one or more processors in communication with the memory storage, wherein the one or more processors execute the instructions to: receive an indication that a first portion of a first region in a time-frequency resource region is used for transmitting first data of a first type of traffic, the time-frequency resource region having a first transmission interval, wherein the first region is reserved for transmissions of a second type of traffic different than the first type of traffic; and receive the first data of the first type of traffic in the first portion of the first region according to the indication. The second type of traffic requires a lower latency than the first type of traffic.

Optionally, in any of the preceding aspects, the indication is transmitted to the device in the first transmission interval after the first data of the first type of traffic is transmitted in the first portion of the first region.

Optionally, in any of the preceding aspects, the indication is transmitted to the device in a second transmission interval following the first transmission interval, the indication being carried in a downlink control channel of the second transmission interval.

Optionally, in any of the preceding aspects, the one or more processors further execute the instructions to receive second data of the first type of traffic in a second region of the time-frequency resource region, the second region allocated for transmissions of the first type of traffic.

Optionally, in any of the preceding aspects, the first region comprises a different time-frequency resource than the second region.

Optionally, in any of the preceding aspects, the one or more processors further execute the instructions to receive third data of the second type of traffic in a second portion of the first region.

Optionally, in any of the preceding aspects, the first data and the third data are transmitted using different OFDM numerologies, an OFDM numerology comprising a set of OFDM parameters.

Optionally, in any of the preceding aspects, the first data is transmitted in different time-frequency resources than the third data.

According to any of the preceding aspects, different types of traffic for different services may be scheduled in the same time-frequency resources, and different types of resources co-existing in the same time-frequency resources may be allocated for transmitting the different types of traffic. Thus, service multiplexing efficiency is enhanced.

### BRIEF DESCRIPTION OF THE DRAWINGS

For a more complete understanding of the present disclosure, and the advantages thereof, reference is now made to the following descriptions taken in conjunction with the accompanying drawings, in which:
FIG. 1 illustrates a diagram of an example wireless communications network;
FIG. 2 illustrates a diagram of an example transmission interval structure;
FIG. 3 illustrates a diagram of another example transmission interval structure;
FIG. 4 illustrates a diagram of yet another example transmission interval structure;
FIG. 5 illustrates a diagram of yet another example transmission interval structure;
FIG. 6 illustrates a diagram of yet another example transmission interval structure;
FIG. 7 illustrates a diagram of yet another example transmission interval structure;
FIG. 8 illustrates a diagram of yet another example transmission interval structure;
FIG. 9 illustrates a diagram of yet another example transmission interval structure;
FIG. 10 illustrates a diagram of yet another example transmission interval structure;
FIG. 11 illustrates a flowchart of an example wireless communications method;
FIG. 12 illustrates a flowchart of another example wireless communications method;
FIG. 13 is a block diagram of an example processing system; and
FIG. 14 is a block diagram of an example transceiver.

### DETAILED DESCRIPTION OF ILLUSTRATIVE EMBODIMENTS

The making and using of embodiments of this disclosure are discussed in detail below. It should be appreciated, however, that the concepts disclosed herein can be embodied in a wide variety of specific contexts, and that the specific embodiments discussed herein are merely illustrative and do not serve to limit the scope of the claims. Further, it should be understood that various changes, substitutions and alterations can be made herein without departing from the scope of this disclosure as defined by the appended claims.

Different types of traffic for different services may be scheduled in the same time-frequency resources, and different types of resources co-existing in the same time-frequency resources may be allocated for transmitting the different types of traffic. Thus, service multiplexing efficiency is enhanced.

Aspects of the present disclosure provide a wireless communications method, where resources allocated for transmission of different types of traffic co-exist within a transmission interval. The different types of traffic, for example, may include video traffic, audio traffic and data traffic. The different types of traffic may be traffic that has different quality of service requirements, such as having different latency requirements. The different types of traffic may also be traffic carrying control information (e.g. physical downlink control channel (PDCCH), HARQ Ack/Nack), payload data, or reference signals (e.g. demodulation reference signals (DMRS), channel state information reference signals (CSI-RS)).

In some embodiments, resources allocated for a first type of traffic and a second type of traffic co-exist in a transmission interval. When a first resource allocated for the first type of traffic is not scheduled for transmitting the first type of traffic, the first resource may be used to transmit data of the second type of traffic. Indication may be sent to indicate that the first resource has been scheduled to transmit the second type of traffic so that a receiver may receive the data of the second type of traffic that is transmitted in the first resource allocated for the first type of traffic.

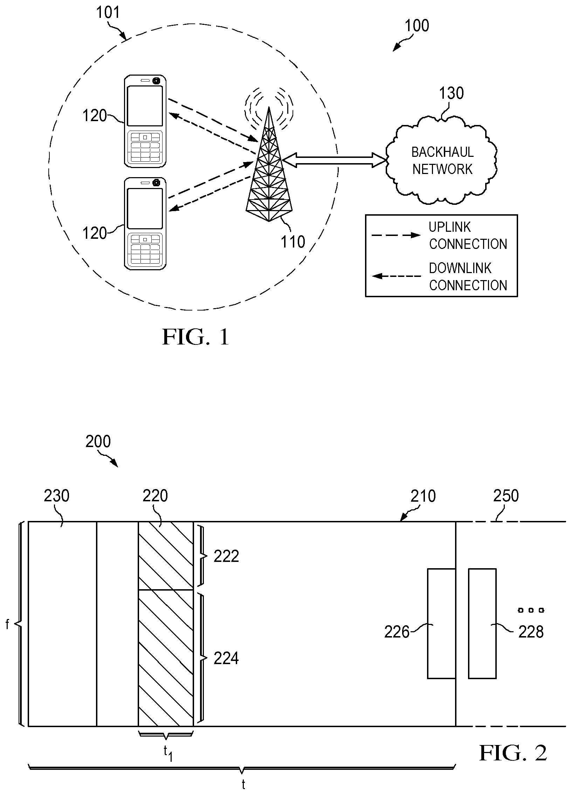

FIG. 1 is a diagram of a network 100 for communicating data. The network 100 comprises a base station 110 having a coverage area 101, a plurality of mobile devices 120, and a backhaul network 130. As shown, the base station 110 establishes uplink (dashed line) or downlink (dotted line) connections with the mobile devices 120, which serve to carry data from the mobile devices 120 to the base station 110 and vice-versa. Data carried over the uplink/downlink connections may include data communicated between the mobile devices 120, as well as data communicated to/from a remote-end (not shown) by way of the backhaul network 130. A wireless communication from a mobile device 120 to the base station 110 may be referred to as an uplink communication. A wireless communication from the base station 110 to the base station 110 may be referred to as a downlink communication. As used herein, the term "base station" refers to any component (or collection of components) configured to provide wireless access to a network, such as an enhanced base station (eNB), a macro-cell, a femtocell, a Wi-Fi access point (AP), or other wirelessly enabled devices. Base stations may provide wireless access in accordance with one or more wireless communication protocols, e.g., long term evolution (LTE), LTE advanced (LTE-A), new radio (NR), High Speed Packet Access (HSPA), Wi-Fi 802.11a/b/g/n/ac, etc. As used herein, the term "mobile device" refers to any component (or collection of components) capable of establishing a wireless connection with a base station, such as a user equipment (UE), a mobile station (STA), and other wirelessly enabled devices. A UE may wirelessly communicate with one or more base stations. In some embodiments, the network 100 may comprise various other wireless devices, such as relays, low power nodes, etc. The wireless communications in the network 100 may be performed by transmitting orthogonal frequency-division multiplexing (OFDM) symbols. The network may also use other applicable wireless communications techniques, such as CDMA, TDMA, FDMA, OFDMA, and SC-FDMA.

Resources are required to perform uplink and downlink communications in the network 100. For example, a base station may wirelessly transmit data to a UE in a downlink communication at a particular frequency for a particular duration of time. The frequency and time duration are examples of resources. A base station allocates resources for downlink communications to the UEs served by the base station.

The network 100 may be configured to support transmission of different types of traffic. For example, the different types of traffic may include video traffic, audio traffic, and data traffic. The different types of traffic may have different communication requirements, such as different latency requirements, different error rate requirements, or other quality of service requirements. The different types of traffic may also include different type of information, such as control information, payload data, or reference signals.

The term "traffic" generally is used interchangeably with the term "data" herein, although in some instances they may be used with different scope from each other, as will be evident from the context in which the terms are used. For example, low-latency communication traffic can be an expression of data with relatively short transmission interval, and latency-tolerant communication traffic may be an expression of data with relatively long transmission interval. In some embodiments, data with subcarrier spacing of 15 kHz may be understood as data with relatively long transmission interval while data with subcarrier spacing of 30 kHz/60 kHz/120 kHz may be understood as data with relatively short transmission interval. In other embodiments, data with subcarrier spacing of 30 kHz may be understood as data with relatively long transmission interval while data with subcarrier spacing of 60 kHz/120 kHz may be understood as data with relatively short transmission interval. It is expressly contemplated that 15, 30, 60 and 120 kHz are shown for purpose of illustration and not limitation.

FIG. 2 illustrates a diagram of an embodiment transmission interval structure 200. The transmission interval structure 200 illustrates co-existence of resources allocated for transmitting different types of traffic. In this example, data is transmitted using the transmission interval structure 200 during a transmission interval *t* over a frequency band *f*. The transmission interval *t* over the frequency band *f* defines a time-frequency resource region 210. A "region" herein is referred to as a time-frequency resource region throughout the disclosure. The time-frequency resource region 210 may be allocated for transmission of a first type of traffic. Allocation of the time-frequency resource region 210 may be pre-determined or dynamic.

In one embodiment, a region 220 (shaded with diagonal lines) may be configured in the time-frequency resource region 210 for transmission of a second type of traffic that is different from the first type of traffic. In one example, the first and the second types of traffic may require different latencies or reliabilities. In another example, the first type of traffic may be data traffic and the second type of traffic may be video traffic. In yet another example, the first type of traffic may be payload data and the second type of traffic may be physical channels carrying control information. The first and the second types of traffic may include any type of applicable traffic in a communications system. The region 220 may be pre-configured or pre-reserved for transmitting only the second type of traffic. Alternatively, the region 220 may be dynamically configured for the second type of traffic. Configuration of the region 220 may be determined based on various reasons or factors, such as traffic throughput, network capacity, transmission service requirements, etc. The region 220 may occupy a portion of the time resource or a portion of the frequency resource in the time-frequency resource region 210. For example, as shown in FIG. 2, the region 220 occupies a time interval *t1* and the entire frequency band *f*. In another example (not shown in FIG. 2), the region 220 may occupy the entire transmission interval *t* and a portion of the frequency band *f.*

Thus, the time-frequency resource region 210 includes time-frequency resources allocated for different types of traffic that co-exist in the same transmission interval. In one embodiment, a communication device, such as a base station or a UE, may transmit data of the first type of traffic in resources of the time-frequency resource region 210 that are not pre-reserved for the second type of traffic, such as a region 230, and transmit data of the second type of traffic in the region 220. Control information for transmitting the two types of traffic in the regions 220 and 230 may be carried in a control region in the time-frequency resource region 210.

The first type of traffic and the second type of traffic may be transmitted using the same or different numerologies. A numerology refers to a set of OFDM parameters. An OFDM parameter, for example, may include a subcarrier spacing length, a cyclic prefix length, an OFDM symbol length, or a slot duration.

In some embodiments, when a portion of the region 220 that is reserved for the second type of traffic is not used or scheduled to transmit the second type of traffic, the unused portion may be also be used to transmit the first type of traffic. For example, a portion (or sub-region) 222 of the region 220 is used to transmit data of the second type of traffic, and another portion (or sub-region) 224 is unused. A part or the entirety of the unused portion 224 may be used to transmit the first type of traffic. A "portion" of a region is herein referred to as a time-frequency region within the region.

Information may be provided to indicate that an unused portion pre-reserved for the second type of traffic is utilized to transmit the first type of traffic. In some embodiments, control signaling may be sent after data of the first type of traffic is transmitted in the unused portion 224. For example, the control signal may be sent in time-frequency resource region 226 at the end of the transmission interval *t,* or in a time-frequency resource region 228 in another transmission interval following the transmission interval *t.* In one implementation, the control signaling may be carried in a downlink physical control channel (e.g. PDCCH) in the time-frequency resource region 228.

The portions 222 and 224 in FIG. 2 are shown to be in a frequency division multiplexing (FDM) manner. As shown, the two regions occupy the same time resource but different frequency resources. Not shown in FIG. 2, in some embodiments, the portions 222 and 224 may also be in a time division multiplexing (TDM) manner, or in a mixed FDM and TDM manner. The portions 222 and 224 may occupy different time-frequency resources in the region 220.

In some embodiments, transmitting the first type of traffic in the unused portion 224 may use the same numerology as transmitting the second type of traffic in the portion 222. In some embodiments, different numerologies may be used for transmitting the second type of traffic in the portion 222 and transmitting the first type of traffic in the unused portion 224. In some embodiments, different numerologies may be used for transmitting the first type of traffic in the region 230 and the unused portion 224 and for transmitting the second type of traffic in the portion 222.

In some embodiments (not shown in FIG. 2), the time-frequency resource region 210 may include more than one region 220 that are pre-reserved for transmitting the second type of traffic. Multiple regions 220 in the time-frequency resource region 210 may occupy different time-frequency resources. In some implementations, one or more of the regions 220 may be used or unused for transmission of the second type of traffic. The one or more regions 220 that are unused for transmission of the second type of traffic, may be used to transmit the first type of traffic. In some implementations, one or more unused portions in the one or more regions 200 may be used to transmit the first type of traffic.

Resources in the region 210 that are not pre-reserved for transmitting the second type of traffic may be referred to as first traffic type resources, and the region 220 may be referred to as second traffic type resources. By reserving the second traffic type resources in the transmission interval *t* allocated for the first type of traffic, resources for different traffic types co-exist in the transmission interval *t.* Co-existence of different traffic type resources for transmitting traffic of different services enhances service multiplexing efficiency. Moreover, using unused portions of the second traffic type resources also increase resource usage efficiency, and improve communications efficiency.

Embodiments in the following will be described with respect to downlink communications. However, this is only for convenience of description and should not be construed as limiting the scope of the disclosure. The embodiments also apply to uplink communications, or mixed downlink and uplink communications.

In some embodiment, UEs served by a base station may need to receive data from the base station with lower latency than other UEs served by the base station. For example, a base station may serve multiple UEs, including a first UE and a second UE. The first UE may be a mobile device used to browse on the Internet. The second UE may be an equipment on an autonomous vehicle driving on a highway. Although the base station is serving both UEs, the second UE may need to receive data with lower latency compared to the first UE. The second UE may also need to receive its data with higher reliability than the first UE. The second UE may be a UE with ultra-reliable low-latency communication (URLLC) traffic, whereas the first UE may be a UE with enhanced mobile broadband (eMBB) traffic. In one embodiment, some UEs may receive several different types of traffic from the base station, e.g., a UE may receive both URLLC and eMBB traffic.

For the convenience of description, in this disclosure, a first group of UEs served by a BS that require lower latency downlink communications than a second group of UEs served by the base station may be referred to as "low-latency UEs" (such as a UE with URLLC traffic), and the second group of UEs may be referred to as "latency-tolerant UEs" (such as a UE with eMBB traffic). Data to be transmitted from the base station to a low-latency UE may be referred to as "low-latency data", and data to be transmitted from the base station to a latency-tolerant UE may be referred to as "latency-tolerant data". The base station may configure a frame structure that is able to accommodate the use of the same time-frequency resources by both low-latency UEs and latency-tolerant UEs.

Resources that are reserved for downlink transmission of latency-tolerant data may be referred to as latency-tolerant resources. In some embodiments, resources used for downlink communications of latency-tolerant data may be partitioned by the base station so that a portion of the resources may be reserved for transmission of low-latency data. The resources that are reserved for downlink transmission of low-latency data may be referred to as "low-latency resources". Low-latency data may be bursty or sporadic in nature, and may be transmitted in short packets. Therefore, there may not always be low-latency data at the base station that needs to be transmitted using all of the allocated or reserved low-latency resources.

In some embodiments, low-latency and latency-tolerant communication resources may co-exist in a communication resource. In particular, a base station may opportunistically schedule, on low-latency resources, latency-tolerant data for one or more latency-tolerant UEs. When latency-tolerant data is scheduled on one or more low-latency resources, control signaling is used to indicate that latency-tolerant data is scheduled on the low-latency resources. Scheduling latency-tolerant data on low-latency resources may be understood as transmitting latency-tolerant data using the low-latency resources. The control signaling, in some implementations, may indicate locations or formats of the low-latency resources scheduled for transmitting the latency-tolerant data. The control signaling may include resource allocation information such as the time, frequency or code resources of the low-latency resources scheduled for transmitting the latency-tolerant data. In some implementations, the control signaling may be part of the downlink control information (DCI) formats. In various embodiments, the low-latency data, traffic, or resources may respectively be URLLC data, traffic, or resources, and the latency-tolerant data, traffic, or resources may respectively be eMBB data, traffic, or resources.

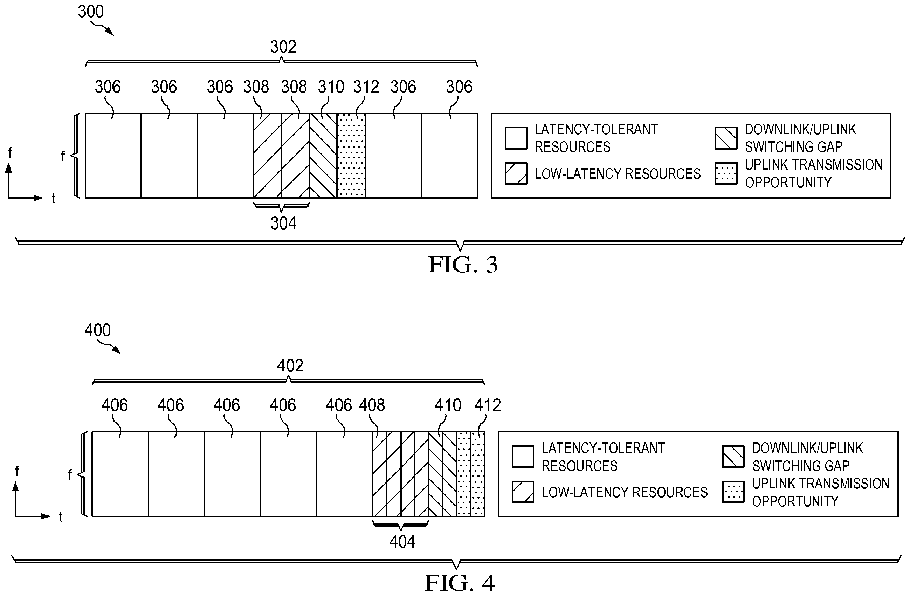

FIG. 3 illustrates a diagram of another embodiment transmission interval structure 300. The transmission interval structure 300 shows co-existence of low-latency and latency-tolerant communication resources. The transmission interval structure 300 includes a single time resource slot (or a transmission interval) 302 over a frequency band *f*. The time slot 302 over the frequency band *f* specifies a time-frequency region. The slot 302 may be multiple contiguous OFDM symbols in length. For example, the time resource slot 302 may be n×7 symbols in length when a normal cyclic prefix is used (where n is a positive integer), such as 7 or 14 symbols in length. In another example, the time resource slot 302 may also be nx6 symbols in length when an extended cyclic prefix (eCP) is used, such as 6 or 12 symbols in length. As shown, the slot 302 includes multiple OFDM symbols 306, and each OFDM symbol 306 is allocated for communication of latency-tolerant traffic, such as eMBB traffic. In this example, the OFDM symbols 306 are latency-tolerant resources. The slot 302 may be a latency-tolerant scheduling interval, or a part of the latency-tolerant scheduling interval when the latency-tolerant scheduling interval includes multiple slots.

In some embodiments, a slot may include smaller resource units than the slot. Each smaller resource unit may include multiple contiguous OFDM symbols. The number of OFDM symbols in a smaller resource unit is fewer than that of the slot. One particular type of smaller resource unit is a mini-slot. A mini-slot is a period of time within the slot. As shown in FIG. 3, the slot 302 includes a mini-slot 304. In this example, the mini-slot 304 is pre-reserved for low-latency communication, such as URLLC traffic. The mini-slot 304 includes two contiguous OFDM symbols 308. The OFDM symbols 308 may be referred to as low-latency communication resources. The OFDM symbols 308 may have a different length than the OFDM symbol 306. The mini-slot 304 may be, for example, 1 symbol in length, 2 symbols in length, 2ⁿ symbols in length (where n is a positive integer), or any other number of OFDM symbols such that the quantity of OFDM symbols in the mini-slot 304 is fewer than that of the slot 302. Thus, the OFDM symbols in the slot 302 are used as latency-tolerant communication resources (i.e., 306) and low-latency communication resources (i.e., 308).

The duration of the low-latency communication resources 308 may be equal to one transmission time unit (TTU), or encompass multiple TTUs. A TTU is the smallest unit of time that can be allocated for a particular type of transmission, for example a low-latency data transmission. A TTU is sometimes referred to as a transmission time interval (TTI). In one embodiment, the low-latency communication resources 308 have a duration that is shorter than a latency-tolerant scheduling interval.

As shown, the mini-slot 304, or the low-latency communication resources 308, occupies a portion of the slot 302 in the time domain but the entire frequency band *f*. Other variations may also apply. For example, the mini-slot 304 may occupy a portion of slot 302 in the time domain and a portion of the frequency band *f* in the frequency domain.

The slot 302 may have a downlink/uplink switching gap 310 and an uplink transmission opportunity 312. The uplink transmission opportunity 312 may be used for, e.g., transmitting hybrid automatic repeat request (HARQ) feedback, uplink control channel, or small uplink data. Further details about the resource slots may be found in U.S. Provisional Application No. 62/379,559, entitled "Co-existence of Low-latency and Latency-tolerant Downlink Communication".

In some embodiments, different numerologies may be used for latency-tolerant and low-latency transmissions. When pre-reserved low-latency resources are not used for low-latency transmissions, they may be use for latency-tolerant transmissions. A respective numerology may be used for each type of transmissions. When the latency-tolerant transmission uses the unused pre-reserved low-latency resources, the latency-tolerant transmission may use a numerology that is the same as the numerology used on other latency-tolerant resources, or may use a numerology in accordance with the low-latency resources.

In one embodiment, the low-latency and latency-tolerant communication resources may have different subcarrier spacings. For example, the latency-tolerant communication resources 306 may have a subcarrier spacing of 30 kHz, and the low-latency communication resources 308 have a subcarrier spacing of 60 kHz. The downlink/uplink switching gap 310 and the uplink transmission opportunity 312 may have a subcarrier spacing of 60 kHz. In this example, the low-latency communication resources 308 have a width that is half the width of the latency-tolerant communication resources 306 in the time domain. In other words, the subcarrier spacing of the low-latency communication resources 308 is twice the subcarrier spacing of the latency-tolerant communication resources 306. It is expressly contemplated that the subcarrier spacing of 30 or 60 kHz are shown herein for purpose of illustration and not limitation. It is also understood that numerologies used for transmission may be scalable. For example, subcarrier spacings are integer multiples of each another, or have a 2ⁿ relationship with each other. Details about numerologies of the low-latency and latency-tolerant communication resources may be found in U.S. Provisional Application No. 62/395,914, entitled "System and Method for Mixed Numerology Coexistence with Slot or Symbol Alignment".

FIG. 4 illustrates a diagram of another embodiment transmission interval structure 400. Similar to the transmission interval structure 300 in FIG. 3, the transmission interval structure 400 also shows co-existence of low-latency and latency-tolerant communication resources. As shown, the transmission interval structure 400 includes a single time resource slot (or a transmission interval) 402 over a frequency band *f*. The time slot 402 over the frequency band *f* specifies a time-frequency region. The slot 402 may be multiple contiguous OFDM symbols in length, such as 7 contiguous OFDM symbols in length. The transmission interval structure 400 includes OFDM symbols 406 allocated as latency-tolerant resources for transmitting latency-tolerant traffic, and a mini-slot 404 pre-reserved for low-latency communications. The mini-slot 404 includes low-latency resources 408. The slot 402 may also include a downlink/uplink switching gap 410 and an uplink transmission opportunity 412. When one or more pre-reserved low-latency resources 408 are not used for low-latency transmissions, they may be scheduled for latency-tolerant transmissions.

Similarly, in some embodiments, different numerologies may be used for latency-tolerant and low-latency transmissions the transmission interval structure 400. The transmission interval structure 400 may or may not use different subcarrier spacing than the transmission interval structure 300. In one example, the latency-tolerant communication resources 406 have a subcarrier spacing of 15 kHz, and the low-latency communication resources 408 have a subcarrier spacing of 60 kHz. The downlink/uplink switching gap 410 and the uplink transmission opportunity 412 have a subcarrier spacing of 60 kHz. As such, the low-latency communication resources 408 have a width that is one quarter the width of the latency-tolerant communication resources 406 in the time domain. More generally, in this embodiment, the subcarrier spacing of the low-latency communication resources 408 is four times that of the subcarrier spacing of the latency-tolerant communication resources 406. It is expressly contemplated that the subcarrier spacing of 15 or 60 kHz are shown herein for purpose of illustration and not limitation. It is also understood that alternate subcarrier spacing configurations are contemplated by this disclosure, for example, where subcarrier spacings are integer multiples of each another, or have a 2ⁿ relationship with each other.

FIGs. 3 and 4 show a transmission interval structure including a resource slot of 7 OFDM symbols in length. In these and the other disclosed embodiments where a resource slot is 14 symbols in length (not shown), the embodiment shown in FIG. 3 may have additional 5 symbols appended to the beginning of the resource slot and additional 2 symbols appended to the end of resource slot. Other arrangements may also be applicable to provide 14 symbols in a resource slot. For example, the embodiment shown in FIG. 4 may have an additional 7 symbols appended to the beginning of the resource slot.

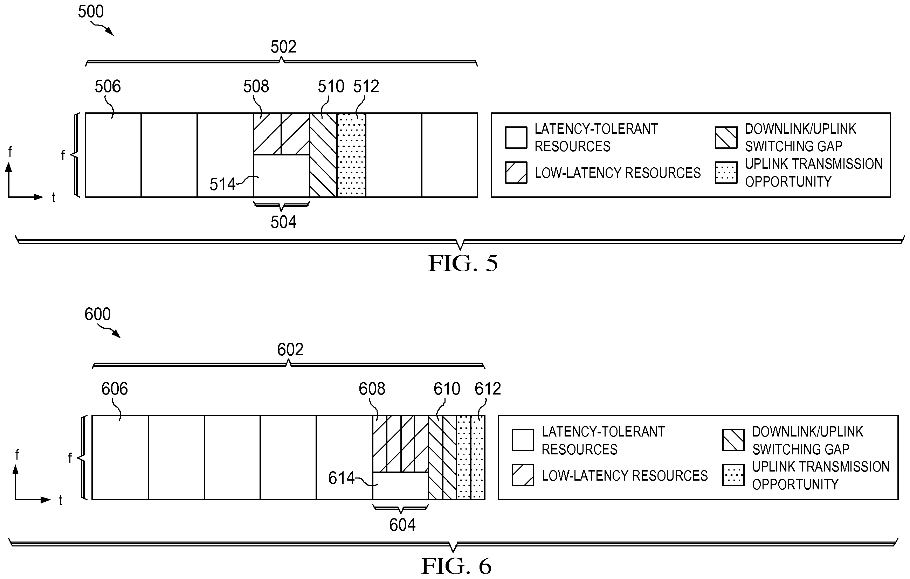

FIG. 5 illustrates a diagram of another embodiment transmission interval structure 500. The transmission interval structure 500 includes a time resource slot (or a transmission interval) 502 over a frequency band *f*. The time slot 502 over the frequency band *f* specifies a time-frequency region. The transmission interval structure 500 includes OFDM symbols 506 allocated as latency-tolerant resources for transmitting latency-tolerant traffic, a mini-slot 504 pre-reserved for low-latency communications and including low-latency resources 508, a downlink/uplink switching gap 510, and an uplink transmission opportunity 512. The low-latency communication resources 508 and the latency-tolerant communication resources 506 use different subcarrier spacing.

In this example, a time-frequency resource region 514 corresponding to the mini-slot 504 that is reserved for low-latency communications is unused to transmit low-latency traffic. The time-frequency resource region 514 occupies a portion of the bandwidth of the frequency band *f* and the entire time resource of the mini-slot 504. The time-frequency resource region 514 may also occupy only a portion of the bandwidth and a portion of the time resource of the mini-slot 504. The time-frequency resource region 514 may be referred to as unused low-latency resources.

The unused low-latency resources 514 may be used as latency-tolerant resources for transmitting latency-tolerant traffic. In this case, the unused low-latency resource 514 may be understood as additional latency-tolerant communication resources occupying unused low-latency communication resources 514. The unused low-latency resource 514 may use the same subcarrier spacing as other latency-tolerant communication resources 506, or may use the same subcarrier spacing as the low-latency communication resources 508. The additional latency-tolerant communication resources 514 may be continuous or non-contiguous with the latency-tolerant communication resources 506. That is, the resources shown in FIG. 5 are logical resources. Mapping of logical resources to physical resources may be continuous (i.e. localized) or non-contiguous (i.e. distributed).

The latency-tolerant communication resources 506 and the additional latency-tolerant communication resources 514 may use the same numerology across the resource slot 502. The time-domain width of the low-latency communication resources 508 may be equal to the time-domain width of the latency-tolerant communication resources 506, 514. In other examples, the width of all the low-latency OFDM symbols may be equal to the width of one latency-tolerant OFDM symbol.

FIG. 6 illustrates a diagram of another embodiment transmission interval structure 600. Similar to the transmission interval structure 500 in FIG. 5, the transmission interval structure 600 includes a time resource slot 602 over a frequency band *f*. The time slot 602 over the frequency band *f* specifies a time-frequency region. The transmission interval structure 600 includes OFDM symbols 606 allocated as latency-tolerant resources for transmitting latency-tolerant traffic, a mini-slot 604 pre-reserved for low-latency communications and including low-latency resources 608, a downlink/uplink switching gap 610, and an uplink transmission opportunity 612. The low-latency communication resources 608 and the latency-tolerant communication resources 606 use different subcarrier spacing.

Similarly, the transmission interval structure 600 includes unused low-latency resources 614 that occupy a portion of the bandwidth of the frequency band *f* and the entire time resource of the mini-slot 604. The unused low-latency resources 614 maybe used as latency-tolerant resources for transmitting latency-tolerant traffic. The unused low-latency resource 614, when utilized for transmitting latency-tolerant traffic, may use the same subcarrier spacing as other latency-tolerant communication resources 606, or may use the same subcarrier spacing as the low-latency communication resources 608. The unused low-latency communication resources 614 may be continuous or non-contiguous with the latency-tolerant communication resources 606.

In some embodiments, an indication may be sent to indicate that unused communication resources allocated for a type of traffic is used as resources of another type of traffic. For example, a base station, such as the base station 110 in FIG. 1, may indicate to one or more UEs in a network 100 that an unused pre-reserved low-latency resource is to be allocated to latency-tolerant communication (as an additional latency-tolerant communication resource). Such an indication may be implemented using control signaling. The control signaling may indicate that the unused low-latency communication resource (e.g. time, frequency or code resources) is scheduled as a latency-tolerant communication resource in various ways. The control signaling may be part of the downlink control information (DCI) formats. As an example, the control signaling for indicating the resource allocation for latency-tolerant communications may be a bitmap representing the time-frequency resources (e.g. resource blocks). Taking FIG. 6 as an example, a base station may indicate the additional latency-tolerant communication resources 614 in the unoccupied portions of low-latency communication resources 608. Alternatively, the base station may indicate the occupied low-latency communication resources 608 so that location of the unoccupied low-latency communication resources 614 may be inferred.

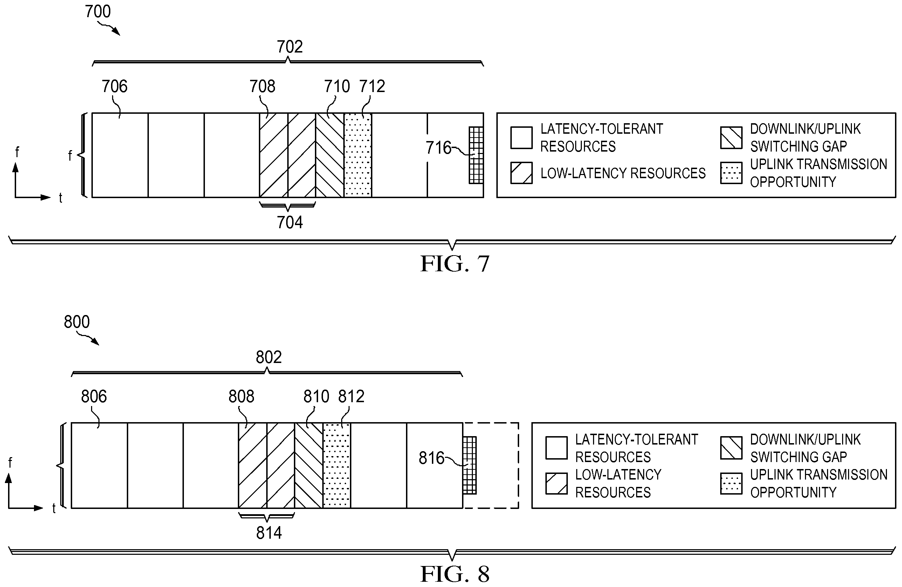

FIG. 7 illustrates a diagram of another embodiment transmission interval structure 700. The transmission interval structure 700 includes control signaling indicating whether an unused low-latency resource is used for transmitting latency-tolerant traffic. As shown, transmission interval structure 700 includes a time resource slot 702. The transmission interval structure 700 includes OFDM symbols 706 allocated as latency-tolerant resources for transmitting latency-tolerant traffic, a mini-slot 704 pre-reserved for low-latency communications and including low-latency resources 708, a downlink/uplink switching gap 710, and an uplink transmission opportunity 712. The low-latency communication resources 708 and the latency-tolerant communication resources 706 use different subcarrier spacing.

In some embodiments, control signaling indicating that an unused portion of the low-latency communication resources 708 is utilized as latency-tolerant communication resources may be included in a region 716 at the end of the slot 702. The control signaling may indicate, for the resource slot 702, which portions of the unoccupied low-latency communication resources 708 were used as the additional latency-tolerant communication resources. In other words, the control signaling indicates that latency-tolerant traffic is scheduled in one or more low-latency communication resources 708 of the mini-slot 704.

FIG. 8 illustrates a diagram of another embodiment transmission interval structure 800. The transmission interval structure 800 is the same as the transmission interval structure 700. As shown, transmission interval structure 800 includes a time resource slot 802. The transmission interval structure 800 includes OFDM symbols 806 allocated as latency-tolerant resources, a mini-slot 804 pre-reserved for low-latency communications and including low-latency resources 808, a downlink/uplink switching gap 810, and an uplink transmission opportunity 812. The low-latency communication resources 808 and the latency-tolerant communication resources 806 use different subcarrier spacing. In this example, control signaling indicating that an unused portion of the low-latency communication resources 808 is utilized as latency-tolerant communication resources occurs in a region 816 that is located at the beginning (e.g., the downlink control region or downlink control channel) of the next resource slot following the resource slot 802. The downlink control region may span 1 or more OFDM symbols. The control signaling, in some implementations, may be a part of the downlink control format (DCI) transmitted in the physical downlink control channel (e.g. PDCCH) in the region 816.

The control signaling, whether occurring at the end of a resource slot or in the beginning of a next resource slot, may be implemented using various applicable signaling formats, such as a bitmap. In some embodiments, a latency-tolerant transmission may be scheduled in a scheduling interval spanning multiple slots. In this case, control signaling may occur at the end of the multiple slots, or in a downlink control channel of the next scheduling interval following the scheduling interval. In other embodiments, the control signaling may be located in a resource/symbol after the unused low-latency communication resources in a resource slot, e.g., mini-slot 814.

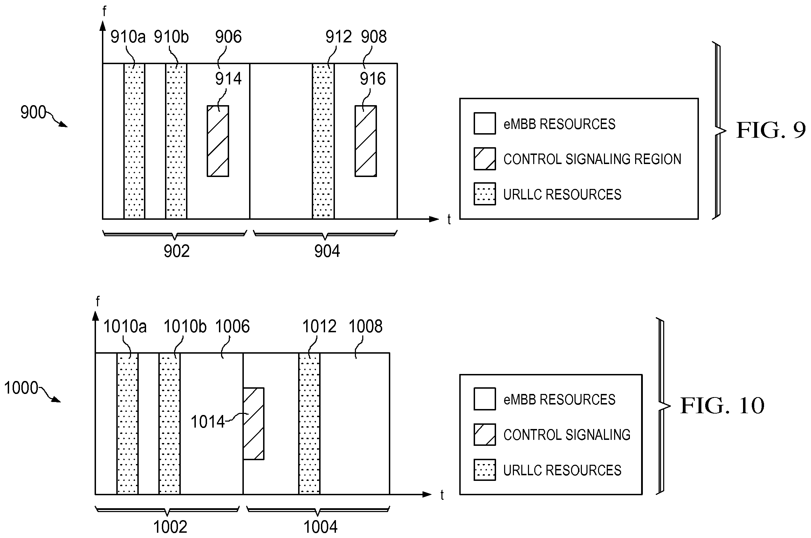

FIG. 9 illustrates a diagram of another embodiment transmission interval structure 900. The transmission interval structure 900 includes two time resource slots 902 and 904 in a frequency band that are allocated for transmission of eMBB traffic. The two time resource slots 902 and 904 may be referred to as eMBB slots. In this example, each of the slots 902 and 904 may be an eMBB scheduling interval. In some embodiments, the slots 902 and 904 may be within one eMBB scheduling interval. The slots 902 and 904 over the frequency band define respective time-frequency resource regions 906 and 908.

The time resource slot 902 includes a mini-slot pre-reserved for transmission of URLLC traffic. The mini-slot over the frequency band defines URLLC resources 910a and 910b (time-frequency resource regions 910a and 910b). As shown, the URLLC resources 910a and 910b occupy the entire bandwidth of the frequency band but include different time resources. The time resource slot 904 also includes a mini-slot that defines a URLLC resource 912 that is pre-reserved for transmission of URLLC traffic. In this case, resources in the time-frequency resource regions 906 and 908 that are not URLLC resources are referred to as eMBB resources. The URLLC resources 910a, 910b and 912 may use different numerologies than the eMBB resources. The URLLC resources 910a, 910b and 912 may also use different numerologies than one another.

In this example, URLLC traffic is scheduled in the URLLC resource 910a in the slot 902. The URLLC resource 910b, although reserved for transmission of URLLC traffic, is not scheduled to transmit any URLLC traffic. Instead, the URLLC resource 910b is scheduled to transmit eMBB traffic. The URLLC resource 910b scheduled to transmit the eMBB traffic may use different numerologies than that used by the URLLC resource 910a or the eMBB resources. In one embodiment, the unused URLLC resource 910b may be re-configured before being scheduled to transmit the eMBB traffic, so that it uses a set of OFDM parameters suitable for transmitting the eMBB traffic.

Control signaling may be sent to indicate whether an unused pre-reserved URLLC resource is utilized instead to transmit eMBB traffic. In this example, the control signaling is transmitted in a control signaling region that is located in the end of an eMBB slot. As shown, control signaling of the slot 902 is transmitted in a control signaling region 914 located in the end of the slot 902. The control signaling may indicate that the URLLC resource 910b is scheduled for transmitting eMBB traffic, or the eMBB traffic is carried in the URLLC resource 910b. The control signaling may also include other information so that a receiver of the eMBB traffic may locate and identify the eMBB traffic transmitted in the URLLC resource 910b for the receiver. In a case that only a portion of the URLLC resource 910b is used to transmit the eMBB traffic, the control signaling should provide control information for the receiver to locate the eMBB traffic transmitted in the portion of the URLLC resource 910b. The slot 904 also includes a control signaling region 916 at the end of the slot 904 for transmitting control signaling. Similarly, the control signal indicates whether any URLLC resource in the slot 904 is used to transmit eMBB traffic.

FIG. 10 illustrates a diagram of another embodiment transmission interval structure 1000. Similar to the transmission interval structure 900, the transmission interval structure 1000 includes two time resource slots 1002 and 1004 in a frequency band that are allocated for transmission of eMBB traffic. The slots 1002 and 1004 over the frequency band define respective time-frequency resource regions 1006 and 1008. The time-frequency resource regions 1006 and 1008 include respective URLLC resources 1010a, 1010b, and 1012 that are pre-reserved for transmitting URLLC traffic. Time-frequency resources in the time-frequency resource regions 1006 and 1008 that are not pre-reserved for URLLC traffic are referred to as eMBB resources. FIG. 10 shows that when a portion of the URLLC resources in the slot 1002, e.g., the URLLC resources 1010a, or the URLLC resources 1010b, or both, is scheduled to transmit eMBB traffic, control signaling indicating such a scheduling may be transmitted in a control region 1014 in the slot 1004. The control region 1014 may be in a downlink control region (or channel) of the slot 1004. In some embodiment, control signaling indicating whether the URLLC resource 1012 is scheduled to transmit eMBB traffic may be transmitted in eMBB resources in the slot 1004 after the URLLC resource 1012, or in eMBB resources in another slot immediately following the slot 1004.

In the embodiments of the disclosure described above, control signaling that indicates whether a time-frequency resource pre-reserved for transmitting a first type of traffic is scheduled to transmit a second type of traffic may be transmitting in the end of a slot where the time-frequency resource is located, or in a control region of another slot following the slot. Those of ordinary skill in the art would recognize that the control signaling may be transmitted in various applicable ways. For example, the control signaling is transmitted after the second type of traffic is transmitted in the pre-reserved time-frequency resource. The control signal is for a receiver of the second type of traffic to identify the second type of traffic transmitted in the time-frequency resource pre-reserved for the first type of traffic.

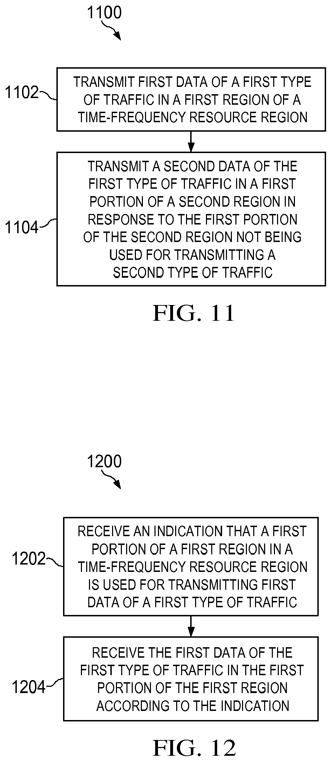

FIG. 11 illustrates a flowchart of an embodiment method 1100 for wireless communications that is not part of the present invention. The method 1100 may be performed by a base station (BS). At step 1102, the method 1100 transmits first data of a first type of traffic in a first region of a time-frequency resource region. The time-frequency resource region has a first transmission interval. The time-frequency resource region also includes a second region for transmissions of a second type of traffic. In one embodiment, the first type of traffic may be eMBB traffic or other latency-tolerant traffic, and the second type of traffic may be URLLC traffic or other low-latency traffic. The first region may include latency-tolerant resources and the second region may include low-latency resources.

At step 1104, the method 1100 transmits second data of the first type of traffic in a first portion of the second region in response to the first portion of the second region not being used for transmitting the second type of traffic.

In one embodiment that is not part of the present invention, the second region may be reserved for transmissions of the second type of traffic. In another embodiment. The second region may include non-contiguous orthogonal frequency-division multiplexing (OFDM) symbols. In one embodiment, the first region may include different time resources than the second region. In another embodiment, the first region may include different frequency resources than the second region.

In one embodiment that is not part of the present invention, the method 1100 may transmit third data of the second type of traffic in a second portion of the second region. The second data and the third data may be transmitted using different OFDM numerologies. Each of the OFDM numerologies includes a set of OFDM parameters.

In one embodiment that is not part of the present invention, the second data may be transmitted in different time resources than the third data. The second data may also be transmitted in different frequency resources than the third data. The second data may be transmitted using a set of OFDM parameters that is different than the first data.

In one embodiment that is not part of the present invention, the method 1100 may transmit the second data of the first type of traffic in the first portion of the second region by transmitting the second data of the first type of traffic in an entirety the second region in response to the entirety of the second region not being used for transmitting the second type of traffic.

In one embodiment that is not part of the present invention, the method 1100 may further send signaling indicating whether the first portion of the second region is used for transmitting the first type of traffic. The signaling may include other information according to which a receiver of the second data receives the second data that is transmitted in the second region. The signaling may be transmitted in the first transmission interval after the second data of the first type of traffic is transmitted in the first portion of the second region. The signaling may also be transmitted in a second transmission interval following the first transmission interval, where the signaling is carried in a downlink control region of the second transmission interval.

In one embodiment that is not part of the present invention, the second type of traffic may require a lower latency than the first type of traffic. In another embodiment, the second type of traffic may include control signaling or a reference signal.

FIG. 12 illustrates a flowchart of another embodiment method 1200 for wireless communications. The method 1200 may be performed by a UE. At step 1202, the method 1200 receives an indication that a first portion of a first region in a time-frequency resource region is used for transmitting first data of a first type of traffic. The time-frequency resource region has a first transmission interval, and the first region is reserved for transmissions of a second type of traffic different than the first type of traffic. At step 1204, the method 1200 receives the first data of the first type of traffic in the first portion of the first region according to the indication.

In one embodiment, the indication may be transmitted to the UE in the first transmission interval after the first data of the first type of traffic is transmitted in the first portion of the first region. In another embodiment, the indication may be transmitted to the UE in a second transmission interval following the first transmission interval, where the indication is carried in a downlink control region/channel of the second transmission interval.

In one embodiment, the second type of traffic may require a lower latency than the first type of traffic. In one embodiment, the first region may include a different time-frequency resource than the second region.

The method 1200 may further receive second data of the first type of traffic in a second region of the time-frequency resource region, where the second region is allocated for transmissions of the first type of traffic. The method 1200 may also include receiving third data of the second type of traffic in a second portion of the first region. The first data and the third data may be transmitted using different OFDM numerologies. An OFDM numerology incudes a set of OFDM parameters. The first data may also be transmitted in different time-frequency resources than the third data.

Although the embodiment methods are discussed with respect to low-latency communication resources and latency-tolerant communication resources, it should be appreciated that any types of communication resources may be used. In some embodiments, a base station may indicate to a UE portions of one or more first time-frequency resources of a time-domain resource slot, where the one or more first time-frequency resources of the time-domain resource slot may be pre-reserved for any first type of traffic. The first type of traffic may be low-latency traffic, or other types of traffic. Any second type of traffic may be transmitted using the one or more first time-frequency resources of the time-domain resource slot. In one embodiment, a UE may receive an indication that pre-reserved low-latency communication resources are not to be used and are available for reuse. In such an example, the UE may communicate with a base station or another communication device regarding the unused pre-reserved low-latency communication resources for latency-tolerant communication. The indication that a UE may receive may occur at a downlink control region of a scheduling interval, or at the end of resources for latency-tolerant communication after the unused pre-reserved low-latency communication resources. In one embodiment, the indication that a UE may receive may occur at resources after the latency-tolerant communication in the pre-reserved low-latency communication resources.

In some embodiment, latency-tolerant data/traffic/communication may be scheduled on latency-tolerant resources at the beginning of a slot. Pre-reserved low-latency resources in the slot may not be occupied by latency-tolerant data/traffic/communication. During the slot duration, there may be low-latency data/traffic/communication arriving and need to be transmitted on the pre-reserved low-latency resources. In some embodiments, if not all of the low-latency resources are needed, a base station may also schedule latency-tolerant data/traffic/communication in the unused low-latency resources during the slot (i.e. as time progresses within the slot). These will be additional resources not scheduled/allocated at the beginning of the latency-tolerant resources.

In some embodiments, a UE receiving latency-tolerant data/traffic/communication may not know that additional latency-tolerant data/traffic/communication was scheduled in the unused low-latency resources when it decodes control signaling on a physical downlink control channel (e.g. PDCCH) at the start of a slot. The UE may be informed of the additional allocated latency-tolerant resources in various ways, e.g., after the signaling of the re-allocation of the unused pre-reserved low-latency resources coming at the end of the latency-tolerant data/traffic/communication in the slot, or after latency-tolerant data/traffic/communication but within the same slot, or at beginning of the next slot in the control channel. Thus, the UE can "post-process" and decode the additional latency-tolerant data occupied in the low-latency resources.

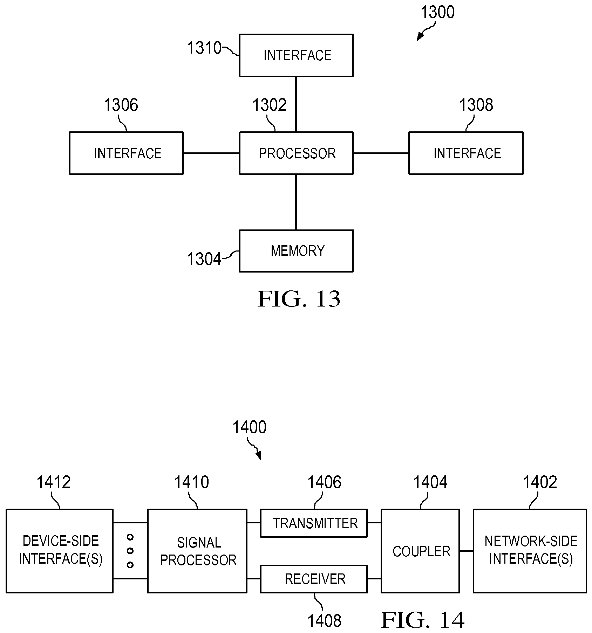

FIG. 13 is a block diagram of a processing system 1300 for performing methods described herein, which may be installed in a host device. As shown, the processing system 1300 includes a processor 1302, a memory 1304, and interfaces 1306-1310, which may (or may not) be arranged as shown in FIG. 13. The processor 1302 may be any component or collection of components adapted to perform computations or other processing related tasks, and the memory 1304 may be any component or collection of components adapted to store programming or instructions for execution by the processor 1302. In an embodiment, the memory 1304 includes a non-transitory computer readable medium. The interfaces 1306, 1308, 1310 may be any component or collection of components that allow the processing system 1300 to communicate with other devices/components or a user. For example, one or more of the interfaces 1306, 1308, 1310 may be adapted to communicate data, control, or management messages from the processor 1302 to applications installed on the host device or a remote device. As another example, one or more of the interfaces 1306, 1308, 1310 may be adapted to allow a user or user device (e.g., personal computer (PC), etc.) to interact/communicate with the processing system 1300. The processing system 1300 may include additional components not depicted in FIG. 13, such as long term storage (e.g., non-volatile memory, etc.).

In some embodiments that are not part of the present invention, the processing system 1300 is included in a network device that is accessing, or part otherwise of, a telecommunications network. In one example, the processing system 1300 is in a network-side device in a wireless or wireline telecommunications network, such as a base station, a relay station, a scheduler, a controller, a gateway, a router, an applications server, or any other device in the telecommunications network. In other embodiments, the processing system 1300 is in a user-side device accessing a wireless or wireline telecommunications network, such as a mobile station, a user equipment (UE), a personal computer (PC), a tablet, a wearable communications device (e.g., a smartwatch, etc.), or any other device adapted to access a telecommunications network.

In some embodiments, one or more of the interfaces 1306, 1308, 1310 connects the processing system 1300 to a transceiver adapted to transmit and receive signaling over the telecommunications network. FIG. 14 is a block diagram of a transceiver 1400 adapted to transmit and receive signaling over a telecommunications network. The transceiver 1400 may be installed in a host device. As shown, the transceiver 1400 comprises a network-side interface 1402, a coupler 1404, a transmitter 1406, a receiver 1408, a signal processor 1410, and a device-side interface 1412. The network-side interface 1402 may include any component or collection of components adapted to transmit or receive signaling over a wireless or wireline telecommunications network. The coupler 1404 may include any component or collection of components adapted to facilitate bi-directiortal communication over the network-side interface 1402. The transmitter 1406 may include any component or collection of components (e.g., up-converter, power amplifier, etc.) adapted to convert a baseband signal into a modulated carrier signal suitable for transmission over the network-side interface 1402. The receiver 1408 may include any component or collection of components (e.g., down-converter, low noise amplifier, etc.) adapted to convert a carrier signal received over the network-side interface 1402 into a baseband signal. The signal processor 1410 may include any component or collection of components adapted to convert a baseband signal into a data signal suitable for communication over the device-side interface(s) 1412, or vice-versa. The device-side interface(s) 1412 may include any component or collection of components adapted to communicate data-signals between the signal processor 1410 and components within the host device (e.g., the processing system 1300, local area network (LAN) ports, etc.).

The transceiver 1400 may transmit and receive signaling over any type of communications medium. In some embodiments, the transceiver 1400 transmits and receives signaling over a wireless medium. For example, the transceiver 1400 may be a wireless transceiver adapted to communicate in accordance with a wireless telecommunications protocol, such as a cellular protocol (e.g., long-term evolution (LTE), etc.), a wireless local area network (WLAN) protocol (e.g., Wi-Fi, etc.), or any other type of wireless protocol (e.g., Bluetooth, near field communication (NFC), etc.). In such embodiments, the network-side interface 1402 comprises one or more antenna/radiating elements. For example, the network-side interface 1402 may include a single antenna, multiple separate antennas, or a multi-antenna array configured for multi-layer communication, e.g., single input multiple output (SIMO), multiple input single output (MISO), multiple input multiple output (MIMO), etc. In other embodiments, the transceiver 1400 transmits and receives signaling over a wireline medium, e.g., twisted-pair cable, coaxial cable, optical fiber, etc. Specific processing systems or transceivers may utilize all of the components shown, or only a subset of the components, and levels of integration may vary from device to device.

It should be appreciated that one or more steps of the embodiment methods provided herein may be performed by corresponding units or modules. For example, a signal may be transmitted by a transmitting unit or a transmitting module. A signal may be received by a receiving unit or a receiving module. A signal may be processed by a processing unit or a processing module. Other steps may be performed by an indicating unit/module, a transmitting unit/module, a sending unit/module, a determining unit/module, or a receiving unit/module. The respective units/modules may be hardware, software, or a combination thereof. For instance, one or more of the units/modules may be an integrated circuit, such as field programmable gate arrays (FPGAs) or application-specific integrated circuits (ASICs).

Although the present disclosure describes methods and processes with steps in a certain order, one or more steps of the methods and processes may be omitted or altered as appropriate. One or more steps may take place in an order other than that in which they are described, as appropriate.

While the present application is described, at least in part, in terms of methods, a person of ordinary skill in the art will understand that the present disclosure is also directed to the various components for performing at least some of the aspects and features of the described methods, be it by way of hardware components, software or any combination of the two. Accordingly, the technical solution described in the present disclosure may be embodied in the form of a software product. A suitable software product may be stored in a pre-recorded storage device or other similar non-volatile or non-transitory computer readable medium, including DVDs, CD-ROMs, USB flash disk, a removable hard disk, or other storage media, for example. The software product includes instructions tangibly stored thereon that enable a processing device (e.g., a personal computer, a server, or a network device) to execute embodiments of the methods disclosed herein.

Although this disclosure has been described with reference to illustrative embodiments, this description is not intended to be construed in a limiting sense. Various modifications and combinations of the illustrative embodiments, as well as other embodiments of the disclosure, will be apparent to persons skilled in the art upon reference to the description. Selected features from one or more of the above-described embodiments may be combined to create alternative embodiments not explicitly described, features suitable for such combinations being understood within the scope of this disclosure. It is therefore intended that the appended claims encompass any such modifications or embodiments.

## Claims

1. A method comprising:
receiving, by a user equipment, UE, an indication that a first portion of a first region (220) in a time-frequency resource region (210, 514, 906, 908, 910a, 910b, 1006, 1008) is used for transmitting first data of a first type of traffic, the time-frequency resource region having a first transmission interval, wherein the first region (220) is reserved for transmissions of a second type of traffic different than the first type of traffic; and
receiving, by the UE, the first data of the first type of traffic in the first portion of the first region according to the indication,
**characterized by**
the second type of traffic requiring a lower latency than the first type of traffic.

2. The method of claim 1, wherein the indication is transmitted to the UE in the first transmission interval after the first data of the first type of traffic is transmitted in the first portion of the first region, or the indication is transmitted to the UE in a second transmission interval following the first transmission interval, the indication being carried in a downlink control channel of the second transmission interval.

3. The method of claim 1, further comprising receiving second data of the first type of traffic in a second region of the time-frequency resource region, the second region (230) allocated for transmissions of the first type of traffic.

4. The method of claim 3, wherein the first region comprises a different time-frequency resource than the second region.

5. The method of claim 1, further comprising receiving third data of the second type of traffic in a second portion of the first region.

6. The method of claim 5, wherein the first data and the third data are transmitted using different OFDM numerologies, an OFDM numerology comprising a set of OFDM parameters.

7. The method of claim 6, wherein the first data is transmitted in different time-frequency resources than the third data.

8. A device comprising:
a non-transitory memory storage comprising instructions; and
one or more processors in communication with the memory storage, wherein the one or more processors execute the instructions to:
receive an indication that a first portion of a first region in a time-frequency resource region is used for transmitting first data of a first type of traffic, the time-frequency resource region having a first transmission interval, wherein the first region is reserved for transmissions of a second type of traffic different than the first type of traffic; and
receive the first data of the first type of traffic in the first portion of the first region according to the indication,
**characterized by**
the second type of traffic requiring a lower latency than the first type of traffic.

9. The device of claim 8, wherein the indication is transmitted to the device in the first transmission interval after the first data of the first type of traffic is transmitted in the first portion of the first region, or wherein the indication is transmitted to the device in a second transmission interval following the first transmission interval, the indication being carried in a downlink control channel of the second transmission interval.

10. The device of claim 8, wherein the one or more processors further execute the instructions to receive second data of the first type of traffic in a second region of the time-frequency resource region, the second region allocated for transmissions of the first type of traffic.

11. The device of claim 10, wherein the first region comprises a different time-frequency resource than the second region.

12. The device of claim 9, wherein the one or more processors further execute the instructions to receive third data of the second type of traffic in a second portion of the first region.

13. The device of claim 12, wherein the first data and the third data are transmitted using different OFDM numerologies, an OFDM numerology comprising a set of OFDM parameters.

14. The device of claim 13, wherein the first data is transmitted in different time-frequency resources than the third data.

## Patentansprüche

1. Verfahren, Folgendes umfassend:
Empfangen, durch ein Benutzergerät, *user equipment*/UE, einer Anzeige, dass ein erster Abschnitt eines ersten Bereichs (220) in einem Zeit-Frequenz-Ressourcenbereich (210, 514, 906, 908, 910a, 910b, 1006, 1008) zum Übertragen erster Daten einer ersten Verkehrsart verwendet wird, wobei der Zeit-Frequenz-Ressourcenbereich ein erstes Übertragungsintervall aufweist, wobei der erste Bereich (220) für Übertragungen einer zweiten Verkehrsart reserviert ist, die sich von der ersten Verkehrsart unterscheidet; und
Empfangen, durch das UE, der ersten Daten der ersten Verkehrsart in dem ersten Abschnitt des ersten Bereichs gemäß der Anzeige,
**dadurch gekennzeichnet, dass**
die zweite Verkehrsart eine geringere Latenz erfordert als die erste Verkehrsart.

2. Verfahren nach Anspruch 1, wobei die Anzeige an das UE in dem ersten Übertragungsintervall übertragen wird, nachdem die ersten Daten der ersten Verkehrsart in dem ersten Abschnitt des ersten Bereichs übertragen wurden, oder die Anzeige an das UE in einem zweiten Übertragungsintervall übertragen wird, das auf das erste Übertragungsintervall folgt, wobei die Anzeige in einem Downlink-Steuerungskanal des zweiten Übertragungsintervalls getragen wird.

3. Verfahren nach Anspruch 1, das ferner ein Empfangen zweiter Daten der ersten Verkehrsart in einem zweiten Bereich des Zeit-Frequenz-Ressourcenbereichs umfasst, wobei der zweite Bereich (230) Übertragungen der ersten Verkehrsart zugewiesen ist.

4. Verfahren nach Anspruch 3, wobei der erste Bereich eine andere Zeit-Frequenz-Ressource umfasst als der zweite Bereich.

5. Verfahren nach Anspruch 1, das ferner ein Empfangen dritter Daten der zweiten Verkehrsart in einem zweiten Abschnitt des ersten Bereichs umfasst.

6. Verfahren nach Anspruch 5, wobei die ersten Daten und die dritten Daten unter Verwendung unterschiedlicher OFDM-Numerologien übertragen werden, wobei eine OFDM-Numerologie einen Satz von OFDM-Parametern umfasst.

7. Verfahren nach Anspruch 6, wobei die ersten Daten in anderen Zeit-Frequenz-Ressourcen übertragen werden als die dritten Daten.

8. Vorrichtung, Folgendes umfassend:
einen nichtflüchtigen Speicher, der Anweisungen umfasst; und
einen oder mehrere Prozessoren in Kommunikation mit dem Speicher, wobei der eine oder die mehreren Prozessoren die Anweisungen für Folgendes ausführen:
Empfangen einer Anzeige, dass ein erster Abschnitt eines ersten Bereichs in einem Zeit-Frequenz-Ressourcenbereich zum Übertragen erster Daten einer ersten Verkehrsart verwendet wird, wobei der Zeit-Frequenz-Ressourcenbereich ein erstes Übertragungsintervall aufweist, wobei der erste Bereich für Übertragungen einer zweiten Verkehrsart reserviert ist, die sich von der ersten Verkehrsart unterscheidet; und
Empfangen der ersten Daten der ersten Verkehrsart in dem ersten Abschnitt des ersten Bereichs gemäß der Anzeige,
**dadurch gekennzeichnet, dass**
die zweite Verkehrsart eine geringere Latenz erfordert als die erste Verkehrsart.

9. Vorrichtung nach Anspruch 8, wobei die Anzeige an die Vorrichtung in dem ersten Übertragungsintervall übertragen wird, nachdem die ersten Daten der ersten Verkehrsart in dem ersten Abschnitt des ersten Bereichs übertragen wurden, oder wobei die Anzeige an die Vorrichtung in einem zweiten Übertragungsintervall übertragen wird, das auf das erste Übertragungsintervall folgt, wobei die Anzeige in einem Downlink-Steuerungskanal des zweiten Übertragungsintervalls getragen wird.

10. Vorrichtung nach Anspruch 8, wobei der eine oder die mehreren Prozessoren ferner die Anweisungen zum Empfangen zweiter Daten der ersten Verkehrsart in einem zweiten Bereich des Zeit-Frequenz-Ressourcenbereichs ausführen, wobei der zweite Bereich Übertragungen der ersten Verkehrsart zugewiesen ist.

11. Vorrichtung nach Anspruch 10, wobei der erste Bereich eine andere Zeit-Frequenz-Ressource umfasst als der zweite Bereich.

12. Vorrichtung nach Anspruch 9, wobei der eine oder die mehreren Prozessoren ferner die Anweisungen zum Empfangen dritter Daten der zweiten Verkehrsart in einem zweiten Abschnitt des ersten Bereichs ausführen.

13. Vorrichtung nach Anspruch 12, wobei die ersten Daten und die dritten Daten unter Verwendung unterschiedlicher OFDM-Numerologien übertragen werden, wobei eine OFDM-Numerologie einen Satz von OFDM-Parametern umfasst.

14. Vorrichtung nach Anspruch 13, wobei die ersten Daten in anderen Zeit-Frequenz-Ressourcen übertragen werden als die dritten Daten.

## Revendications

1. Procédé comprenant :
la réception, par un équipement utilisateur, UE, d'une indication du fait qu'une première partie d'une première région (220) dans une région de ressources temps-fréquence (210, 514, 906, 908, 910a, 910b, 1006, 1008) est utilisée pour transmettre des premières données d'un premier type de trafic, la région de ressources temps-fréquence ayant un premier intervalle de transmission, la première région (220) étant réservée à des transmissions d'un second type de trafic différent du premier type de trafic ; et
la réception, par l'UE, des premières données du premier type de trafic dans la première partie de la première région selon l'indication,
**caractérisé par**
**le fait que** le second type de trafic nécessite une latence plus faible que le premier type de trafic.

2. Procédé selon la revendication 1, dans lequel l'indication est transmise à l'UE dans le premier intervalle de transmission après la transmission des premières données du premier type de trafic dans la première partie de la première région, ou l'indication est transmise à l'UE dans un second intervalle de transmission suivant le premier intervalle de transmission, l'indication étant transportée dans un canal de gestion de liaison descendante du second intervalle de transmission.

3. Procédé selon la revendication 1, comprenant en outre la réception de deuxièmes données du premier type de trafic dans une seconde région de la région de ressources temps-fréquence, la seconde région (230) étant attribuée à des transmissions du premier type de trafic.

4. Procédé selon la revendication 3, dans lequel la première région comprend une ressource temps-fréquence différente de la seconde région.

5. Procédé selon la revendication 1, comprenant en outre la réception de troisièmes données du second type de trafic dans une seconde partie de la première région.

6. Procédé selon la revendication 5, dans lequel les premières et les troisièmes données sont transmises à l'aide de numérologies OFDM différentes, une numérologie OFDM comprenant un ensemble de paramètres OFDM.

7. Procédé selon la revendication 6, dans lequel les premières données sont transmises dans des ressources temps-fréquence différentes des troisièmes données.

8. Dispositif comprenant :
une mémoire de stockage non transitoire comprenant des instructions ; et
un ou plusieurs processeurs en communication avec la mémoire de stockage, le ou les processeurs exécutant les instructions exigeant :
la réception d'une indication du fait qu'une première partie d'une première région dans une région de ressources temps-fréquence est utilisée pour transmettre des premières données d'un premier type de trafic, la région de ressources temps-fréquence ayant un premier intervalle de transmission, la première région étant réservée à des transmissions d'un second type de trafic différent du premier type de trafic ; et
la réception des premières données du premier type de trafic dans la première partie de la première région selon l'indication,
**caractérisé par**
**le fait que** le second type de trafic nécessite une latence plus faible que le premier type de trafic.

9. Dispositif selon la revendication 8, dans lequel l'indication est transmise au dispositif dans le premier intervalle de transmission après la transmission des premières données du premier type de trafic dans la première partie de la première région, ou dans lequel l'indication est transmise au dispositif dans un second intervalle de transmission suivant le premier intervalle de transmission, l'indication étant véhiculée dans un canal de gestion de liaison descendante du second intervalle de transmission.

10. Dispositif selon la revendication 8, dans lequel le ou les processeurs exécutent en outre les instructions exigeant la réception des deuxièmes données du premier type de trafic dans une seconde région de la région de ressources temps-fréquence, la seconde région étant attribuée à des transmissions du premier type de trafic.

11. Dispositif selon la revendication 10, dans lequel la première région comprend une ressource temps-fréquence différente de la seconde région.

12. Dispositif selon la revendication 9, dans lequel le ou les processeurs exécutent en outre les instructions exigeant la réception des troisièmes données du second type de trafic dans une seconde partie de la première région.

13. Dispositif selon la revendication 12, dans lequel les premières et les troisièmes données sont transmises en utilisant des numérologies OFDM différentes, une numérologie OFDM comprenant un ensemble de paramètres OFDM.

14. Dispositif selon la revendication 13, dans lequel les premières données sont transmises dans des ressources temps-fréquence différentes des troisièmes données.
